(19) **Europäisches Patentamt / European Patent Office / Office européen des brevets**

(11) **EP 2 810 152 B1**

(12) # EUROPEAN PATENT SPECIFICATION

(45) Date of publication and mention
of the grant of the patent:
**15.08.2018 Bulletin 2018/33**

(51) Int Cl.:
***G06F 3/0481*** *(2013.01)*     ***G06F 17/30*** *(2006.01)*
***G06F 3/0484*** *(2013.01)*

(21) Application number: **13714534.8**

(22) Date of filing: **30.01.2013**

(86) International application number:
**PCT/BG2013/000001**

(87) International publication number:
**WO 2013/113078 (08.08.2013 Gazette 2013/32)**

(54) **METHOD FOR VISUALIZATION, GROUPING, SORTING AND MANAGEMENT OF DATA OBJECTS THROUGH THE REALIZATION OF A MOVEMENT GRAPHICALLY REPRESENTING THEIR LEVEL OF RELEVANCE TO DEFINED CRITERIA ON A DEVICE DISPLAY**

VERFAHREN ZUR VISUALISIERUNG, GRUPPIERUNG, SORTIERUNG UND VERWALTUNG VON DATENOBJEKTEN DURCH DIE AUSFÜHRUNG EINER BEWEGUNG ZUR GRAFISCHEN DARSTELLUNG IHRES RELEVANZGRADS FÜR BESTIMMTE KRITERIEN AUF EINER VORRICHTUNGSANZEIGE

PROCÉDÉ DE VISUALISATION, REGROUPEMENT, TRI ET GESTION D'OBJETS DONNÉES GRÂCE À L'EXÉCUTION D'UN MOUVEMENT REPRÉSENTANT GRAPHIQUEMENT LEUR NIVEAU DE PERTINENCE PAR RAPPORT À DES CRITÈRES DÉFINIS SUR UN ÉCRAN DE DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2012  BG 11112912**

(43) Date of publication of application:
**10.12.2014  Bulletin 2014/50**

(73) Proprietor: **"Elido" Ad**
**1421 Sofia (BG)**

(72) Inventor: **LAMBREV, Vladislav**
**1612 Sofia (BG)**

(74) Representative: **Dehns**
**St. Brides House**
**10 Salisbury Square**
**London EC4Y 8JD (GB)**

(56) References cited:
**EP-A2- 0 955 591     EP-A2- 1 762 950**
**WO-A1-00/43908**

**Description**

**TECHNICAL FIELD OF THE INVENTION**

The presented method is related mainly to computer and communication device graphic user interfaces (GUI). It is directed at sorting and executing actions on files and programmes. Its aim is to facilitate the user in choosing the desired files, applications, Internet and database search results, and from data stored on communication devices. The user is assisted by active graphic representation of the level of relevance of the attributes of an element in comparison to the rest of the represented elements and the possibility to execute group actions on the objects depending on their relevance to user activated attributes.

**BACKGROUND OF THE INVENTION**

Document EP0955591A2 discloses a method for organizing information in a computer system, particularly one having a graphical user interface which includes graphical representations of documents. Document EP1762950A2 discloses an information processing method of discriminating an object contained in a first image and grouping the first image to a plurality of grouping destinations for each object. Document WO00/43908A1 discloses a system and method for sorting large data quantities of data in a database.

The evolution of the methods of visualization and control of data objects on computer devices and the user interfaces (UI) that implement them in general seek to resolve the problem of simplifying searching and executing operations with the data objects accessible to the computer device, reducing the need for knowledge of the organization of data on the device and reducing the required specialized technical skills for working with it.

Operating with computer devices in the 50s was performed by loading operations and data by directly manipulating the electronic elements constituting the device memory. This is a slow process that requires the user to be fully familiar with the device on a technical level. In order to facilitate the user, the first command input in a pseudo natural language was introduced formalizing the most commonly used operations like the initiation of procedures, loading data, user output to external memory or printing device, setting task priority, etc. The introduction of pseudo natural languages for the management of devices marks the appearance of UI as we understand them now - a means for the user to manage data, programme tasks and communications on a device.

In general the development of interfaces is stimulated by the need to widen the scope of people working with computer devices. The increase in computing power requires and allows the introduction of new peripheral devices for the communication between the user and the computer with a tendency to reduce the required number of operations and the time needed for performing tasks. In time the direct input of data and information into the device memory is substituted by the use of punch cards and tapes as means of user input, printing devices as means of user output in the 1960s, and mass using of the computer terminals with keyboards and screens introducing the combined alphanumeric input and output in the 1970s. This allow for a much better dialogue with the computer device and leads to the development of the operational systems. Operational systems come considerably closer to the natural language. The organization of data and applications on the computer device is standardized and adopts the well-known present-day list organization of the data and the executable procedures (programmes). Despite the significant acceleration of the process, interfaces as a whole follow the model of *command input with parameters entered from the keyboard* to *text output on a printing device or a monitor.* As a result the output of data from computer devices can be described by the combination of *row number, position on row,* and *symbol number from a commonly accepted symbol table.* The input of data into the computer device is executed in a similar fashion, most often in rows (e.g. the still familiar command row). Output generally reflects the capabilities the existing printing devices. The fundamental novelty resulting from the functionality of terminals is the interactive mode of communication with the device. In order to facilitate user input from terminal devices, the cursor is introduced, which marks the *row number* and *position in the row (coordinate)* where the user can enter delete or correct a *symbol* from a *commonly accepted symbol table.* For the management of the cursor, dedicated movement keys are introduced (*up, down, left,* and *right*), the single function of which is to move the cursor on the screen and mark the position for interaction with the device. The new capabilities allow the simplification of user input as well as the introduction of a possibility for user interaction during the execution of programmes on the device. The effect on the development of interfaces is the introduction of lists of standard actions and commands (options) executable by the device in a specified order of user interaction. During the same period, the division of the screen in work fields like a data field and control field located at the bottom part of the screen are introduced. Commands can be executed both by entering symbols on the keyboard or by moving and positioning the cursor over to the control field by means of the movement keys. These commands, which are constantly available on the screen in a field different from the one containing the data, are the predecessors of modern menus. The combination between a visualized list of objects in the data field, which is retrieved by means of a command, and a control field occupying a dedicated space on the screen can be viewed as the prototype for all contemporary systems for the representation, grouping, sorting and management of objects on computer devices.

For more information on early stage stages of the development of the interfaces and the related data organisation interested reader may refer to **James Martin** Design of Man-Computer Dialogues, Prentice-Hall, Inc., Englewood Cliffs, New Jersey, 1973.

Despite the significant simplification of the communication between the user and the device at that point the use of every individual computer device is shared among large groups users and the problems of familiarity with interfaces (communication and management of devices) are resolved by experts with excellent knowledge of the organization of the data and the commands in operational systems (formal command and query languages). According to the thus described **background, in the context of the method of this invention from here on we will call** *field* **any part of the device screen dedicated to the visualization of data from the device or control of the application executing the method. In the context of the method's description from here on we will refer to as** *management of an object on the computer device* **to any action that the device or applications accessible and open to the device can perform with the represented objects (e.g. printing, sending, and execution).**

The mass introduction of semiconductor technology allows for the production of more affordable electronics and logically leads to the appearance of computers for personal use. This commands the marked simplification of the communication with and management of the computer devices as interfaces needed to be manipulated by users with significantly lesser specialized knowledge. The basic change in interfaces is made possible by the mass implementation of graphic displays. For the first time information could be represented not just by symbols on fixed positions on the screen but also by graphics. The display output could stop being solely an endless sheet where a fixed number of commonly accepted symbols could be printed but becomes a graphic work plane. The output of the computer device could now be described by the above system of *row number, position on row and number of character from a commonly accepted symbol table* as well as in the form of *points with coordinates X and Y and colour* Z. In order to adequately interact with the device the new output requires a way for the user to perform pointing actions other than the familiar *row number-row position-symbol number.* The user needs to be able to indicate a *point with coordinates X and Y on* the device display and to initiate signals concerning that point. To that effect the term *pointer* is introduced (resulting in the familiar arrow) that graphically represents the coordinates on the screen and is accessible to the user to interact with. The pointer can be considered as a direct descendant of the cursor as it can also be controlled by means of the arrow keys described above as cursor controls and the signal keys (e.g. *enter).* In order to make it easier to manage the new functionality of the graphic display, a new peripheral device is created called a *mouse* that apart from communicating coordinates can also signal commands.

The user's actions on the graphic display can be controlled by means of different pointing devices (mouse, classic keyboard, touch pad). In general the pointing device allows the user to control the position of the cursor along the X and Y axes of the display and initiate signals associated with the current coordinates of the cursor. To ensure this, most pointing devices have integrated buttons. The device can now also process data about the time when the signal is initiated and its duration. The combined data for the position of the cursor and the signals from the pointing device generate on the computer device the so called *events* that can be used for management (e.g. *click, double click, mouse down,* and *mouse up* for a mouse). If on the display of the device a work plane is generated with dimensions 640 by 480 points, within it work fields can be defined (e.g. a quadrangle with coordinates (0,0,50,100). If the combination of events as described above and defined work fields is assigned a computer device action, it can be used for the management of the computer device actions which are not performed by typing commands but by using combinations of movements, positions and signals (e.g. *in case of a click event in field (0,0,50,100) perform action...).* This transforms the user interface (UI) into a graphic user interface (GUI). **According to the thus described background, in the context of the method description from here on we will refer as** *work plane* **to the graphic plane representing the part of the screen of the device within which the pointing device can generate position coordinates X and Y and feed signals associated with the said position.** For more information on managing work planes interested reader may further refer to US5072412 -User interface with multiple workspaces for sharing display system objects.

The new capabilities of computer technology, the introduction of new input and output devices and the wider scope of users lead to the surge of new ways of interaction of users with computer devices. In order for the user to operate with the existing list and folder data storage systems on computer devices, the files and programmes need to have a *graphic representation in the GUI environment.* An example of such a graphic representation is the *icon.* The icon is an identificator located on the graphic monitor and associated with a data set on the device. Usually the icon represents a file, a programme or a part of a programme. By moving the pointer across the screen of the device the user can choose an icon that is logically associated with the represented object and issue commands associated with that object (e.g. *start the programme)* by feeding a signal from the pointing device. This interaction is fundamental to all contemporary methods of object management on a graphic display in computer devices. **According to the thus described background, in the context of the method description from here on we will refer as** *visualization* **of an objects to any graphic representation of an object (icon) or character string (name) located on and associated with a polygon on the work plane and at the same time associated with an object accessible to the device, which can be managed in the sense described above by means of moving the pointer across the work plane over the**

**field associated with the visualization of the objects and signals generated by a signal generating device.** For more information on fundamental ways of interaction of data objects with the user by means of interfaces interested reader may further refer to User interface with multiple workspaces for sharing display system objects US5072412**.**

In the existing systems for visualization, grouping, sorting and management, files are amassed in hierarchical tree view lists. When in one file list there is a link to another file list, the files on the second list are said to be in a *folder.* Every folder can contain files as well as other folders. Operational systems allow the user to operate (issue commands) with the files on the device. This is done by means of the so called *file system* - a list storing the information the device needs to access the data in the file as well as additional details about the file (e.g. creation date, modification date, size). These details are called *file attributes from the file system.* For the needs of execution of programmes they can be stored in a structured way or retrieved from the file together with other details (e.g. author and topic for text files or resolution and geolocation for image files stored on the device). This data will also be referred to *as file attributes.* In the context of the method description file attributes from the file system and additional file attributes for programme execution are identical. However, it is necessary to underline that the set of file attributes from the file system is similar for all files in the system, while other attributes can be present or missing depending on the file type.

The file is a data package that the user can operate with, modify and create. It is commonly accepted to call files containing instructions executable by the device *programmes.* **Despite the fact that from a logical point of view the above mentioned definitions encompass a wide enough scope of terms in computer technology, in the context of the description of the current method we will introduce the terms** *object, dynamic connection* **to an internal or external database accessible to the device and** *result list.* **From this point on, in the context of the description we will be referring as** *files* **to data packages stored on the device. According to the thus described background, in the context of the method description from here on we will be referring as** *attributes* **of the object to the information about the object that is available from the file system as well as information about the object generated by other applications and accessible to the device. As** *list of results* **we will refer to a list of structured data containing comparable attributes resulting from the execution of the application and accessible to the device. As** *dynamic connection* **to a database we will refer** to retrieval of a list of structured data containing **comparable attributes accessible to the device. In the context of the method description an** *object* **can be any file, element from the result list or database entry. Realising the logical mutual replaceablity of the above terms, from this point on they will be used to the effect of better comparability of the current description with similar descriptions.** For more on creating and manipulating data objects on the computer screen refer to US4739477 - further Implicit creation of a superblock data structure.

In the 1980s as a result of the introduction of the basic GUI elements described above, commonly accepted forms of the representation of objects on computer devices emerge. They are a combination of the use of windows (work planes on the graphic display), command menus and icons that represent objects. User input is implemented by means of a pointer, which is managed with a pointing device. The forms of representing objects on computer devices from before the introduction of GUI (printout of a list on a computer display, input in a command row and choosing a command from an options list) remain virtually unchanged while integrated into windows and work fields. In windows, files are represented in a text list or by icons. In order to activate a file the, pointer is positioned on the icon or the name of the file in the list and a signal is initiated (*click*). It is possible to have a number of windows active on the device screen at the same time. Within one window with represented objects work fields can be defined associated with actions on the represented objects (e.g. recycle bin for deleting). Operating with the represented objects is possible by means of moving them from one field to another or transferring them to other windows. Moving the objects is implemented by positioning the pointer over the desired icon and initiating a signal (*mouse down event*). If while the pointing device keeps feeding a continuous and unbroken signal (*mouse down event*) while the position of the pointer changes to a point within the work field associated with the command (e.g. *send*) and at that the pointing device terminates the signal (*mouse up event*) the associated action (*send*) is performed with the object that has been moved to the *send* associated field.

According to the thus described background, in the context of the method description from **this point on we will refer as** *movement of an object* **to the above described type of movements across the work plane of the visualization associated with the said object.**

The objects represented on the work plane can be ordered by different predefined criteria accessible through their attributes (e.g. creation date or file size). Searching within the represented objects according to defined criteria is implemented by defining dedicated fields (e.g. a text field for input of part of the file name where at entering each following character only the files containing the user specified string in their name remain on the screen) or by activating new windows and defining multiple criteria for different attribute values of the represented objects.

In general this representation model was preserved with some additions consisting in improvements in its existing capabilities rather than the introduction of radically new functionality. The icon, for instance, evolved from an arbitrary image related to the file type into a direct illustration of the file contents (thumbnails) where possible.

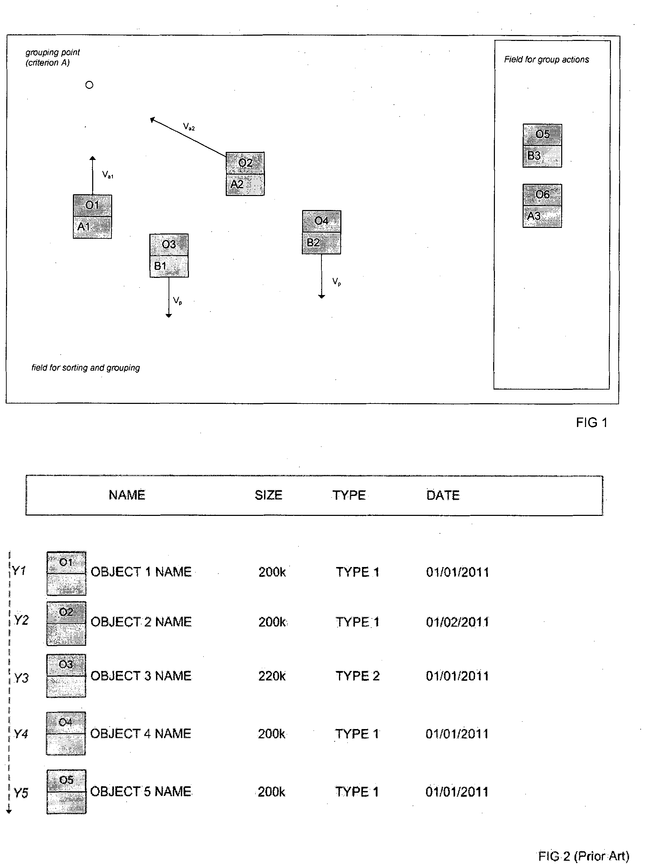

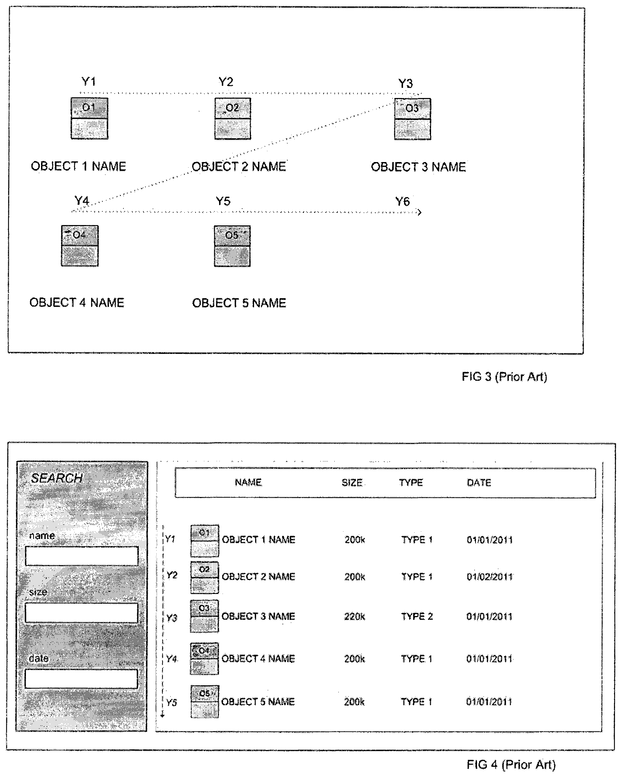

In existing systems objects are visualized on predetermined fixed positions - in the form of a list (**Fig. 2**), of objects arranged in a grid (**Fig. 3**), of icons in windows, etc. This is a one-dimensional list arrangement (e.g. from largest to smallest associated with positions Y1...Yn in **Fig. 2** and **Fig. 3**). As Fig. 2 and Fig. 3 demonstrate, in both cases the visualization of objects includes a graphic representation (icon or thumbnail, name, file size, file type and modification date). The objects are arranged on fixed positions Y1...Y5 by one of their attributes, in this case *name,* but in both cases the arrangement is one-dimensional because in the second figure the positions Y1...Y6 are again arranged in a predefined line even if it is not straight.

The rearrangement of objects in systems for visualization, grouping, sorting and management is implemented by defining another attribute for ordering the visualization of the list that is applied to the entire visualized list. For instance, sorting by file name instead of sorting by size.

Actions are performed on objects (files) after the individual selection of one or more objects.

Figure 4 demonstrates the usual implementation of the input of additional searching and sorting criteria in existing systems for visualization and control. The visualization of objects includes a graphic representation (icon and name). The objects are arranged again on fixed positions Y1...Y5 by one attribute - in this case *name.* When additional sorting or searching is needed, new work fields are used that apply new criteria to accessible attributes. The new search and sort is performed on the available list or another set of objects and in general is not related to the represented list while the result is once more visualized as a one-dimensional list sorted by one attribute on positions Y1...Y5.

User interfaces suffer noticeable changes with the introduction of small portable communication computer devices like smartphones and tablets. From an interface point of view, the basic differences between them and personal computers are the use of the human finger as a principal pointing device, the significantly smaller size of the screens and work planes and the introduction of integrated movement sensors and sensors for the position of the device in space. The use of fingers as pointing devices lowers the accuracy of positioning the cursor on the work plane. As a result, positioning is done in an area of the work plane rather than in a point, without that leading to any essential changes in the already described methods of managing objects on a computer device. The smaller displays can visualise a much smaller number objects which requires solutions for representing information in portions, dividing the work plane in smaller fields and the introduction of new ways of switching between visible areas of the work plane across the device display. For more information on managing object visualizations including their movement in work plane interested reader may further refer to User interface with multiple workspaces for sharing display system objects US5072412**.**

The integration in computer devices of various additional sensors allows the introduction of new signals, which not only change the position of the represented objects, but can also perform actions - for example, sending a file or changing the number of objects represented on the display and the possible ways the user has to interact with them.

Despite the developments in object representation and the increased user convenience in working with windows and operating with objects, these changes do not lead to essential differences in visualization and management. The data object representations in computer devices is consisting essentially of the visualizations of the traditional list types. In searching and sorting the objects are ordered in lists by relevance and their arrangement on the work plane uses fixed positions and is one-dimensional, usually oriented along one of the display axes with a possibility of switching between them during the visualization (e.g. a list of files ordered vertically by date).

When searching and sorting by several criteria is needed, filtering or ordering of objects by consecutive application of criteria is used. For instance, the representation of files is done by applying Criterion 1 (e.g. *date*), then applying Criterion 2 (e.g. *file type*), then applying Criterion 3 (e.g. *a specified character string in the file name),* and so on. The criteria are defined in advance and once the process starts the user cannot interrupt the work of the device and refine the criteria. The results are again represented on the work plane as a one-dimensional list produced by the consecutive application of criteria. The one-dimensional arrangement of objects does not allow for a convenient representation of their level of relevance to the defined multi-criteria searching and sorting. In traditional list type graphical representations, it is only evident that Element A is more relevant to the criteria than Element B but not to what extent.

In general, we can conclude that in existing interfaces:

- Objects are chosen according to criteria passive in respect to the object itself.
- The visualization is performed on lists ordered by fixed criteria.
- The lists are represented in windows on predetermined positions - in rows or a grid - were the order and arrangement are one-dimensional.
- The operations of searching and sorting are performed by consecutively applying criteria and the results are represented in one-dimensional lists.
- After defining the criteria, the user receives results of sorting or filtering but cannot intervene during the execution of the process.
- In existing systems the operations for refining criteria are generally aimed at narrowing the results in an already formed list and if a broader criterion is needed from the point of view of the interface the operation has to be restarted.

## TECHNICAL SCOPE OF THE INVENTION

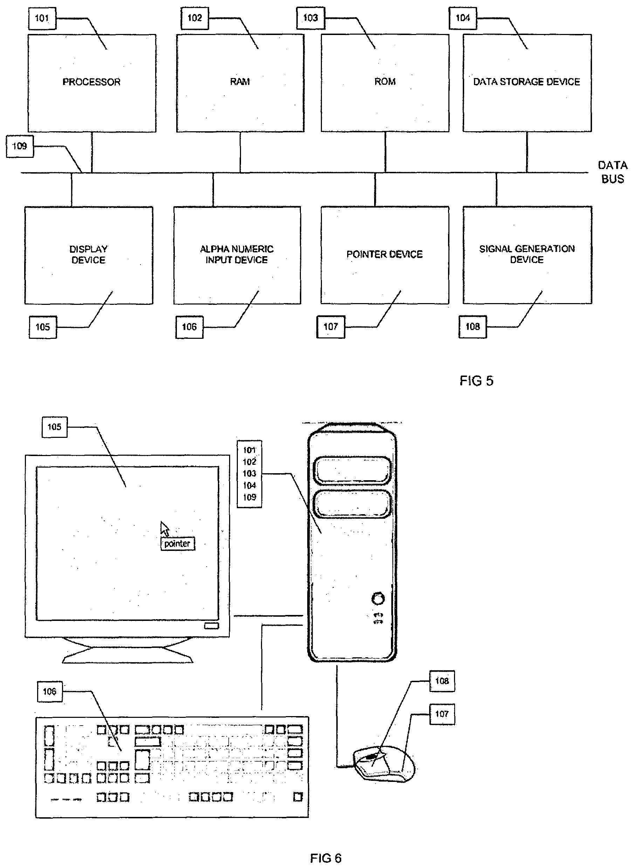

The invention is as set out in the independent claim. For the purposes of the explanation and not limitation of the proposed method (**Fig. 1**) it will be described for a computer device of a traditional type such as the ones quoted in EP 2146269A1. Regardless of that, the experience of transferring existing interfaces to different devices makes it evident that this method is also applicable to any device that visualizes objects on work planes (windows) or spaces and using a pointing device capable of communicating information about the position of the pointer (cursor) on the work planes and signalling user action in respective points. The functional block-scheme of a computer device (**Fig. 5**) comprising : a data bus for communicating information, a processor coupled with the bus for processing information and instructions, a random access memory (RAM) coupled with the bus for storing information and instructions for the processor, a read only memory (ROM) coupled with the bus for storing static information and instructions for the processor, a data storage device such as a hard drive or flash memory coupled with the bus for storing information and instructions, a display device coupled to the bus for displaying information to the computer user, an alphanumeric input device including alphanumeric and function keys coupled to the bus for communicating information and command selections to the processor, a cursor control device coupled to the bus for communicating information and command selections to the processor, and a signal generating device coupled to the bus for communicating command selections to the processor.

The computer device implementing the current invention can be connected to a display based on liquid crystals, a cathode tube or any other technical solution capable of generating images or alphanumeric data, recognisable to the user. The pointing device allows the user to communicate dynamic signals for the cursor (pointer) position on the display of the computer device. For the purposes of the explanation and not limitation of the current invention we will use a standard computer configuration working with a two-dimensional plane (**Fig. 6**) but the principles of the method can be implemented also in input and output devices generating multi-dimensional images and communicating data about the movement of the cursor or the device itself in space.

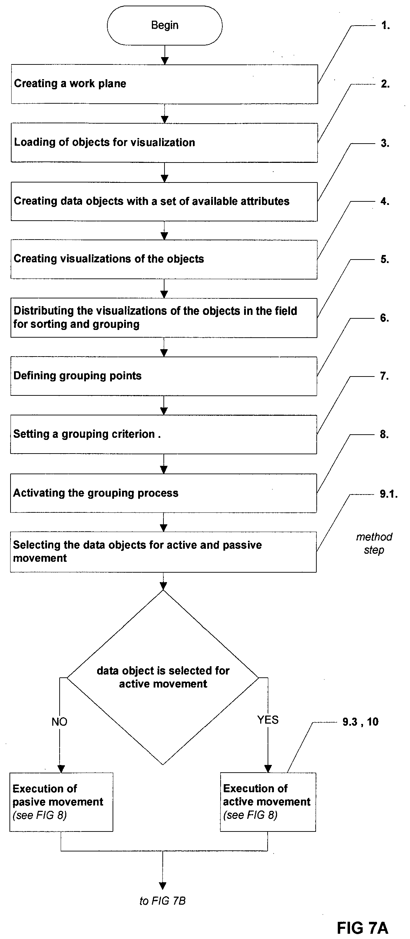

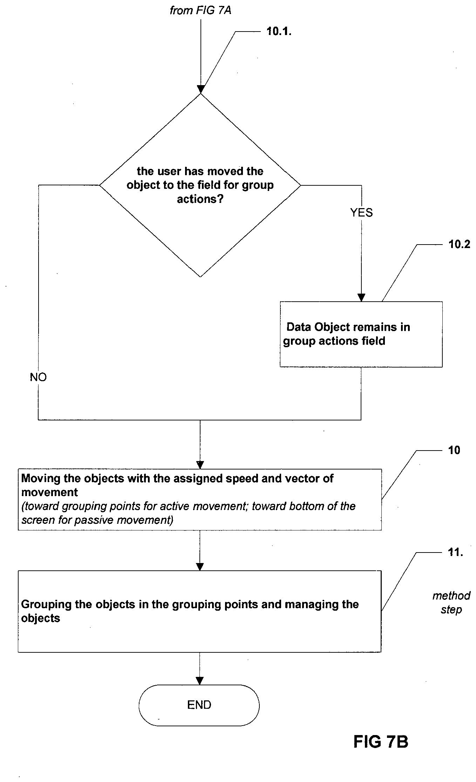

Pointing devices in contemporary technology vary: mouse, trackball, stylus, human finger on a touch screen, etc. (**Fig. 7**). Alphanumeric input devices can vary from conventional keyboards through a keyboard temporarily generated on the device display to a device for numeric, voice or handwritten input, transforming signals into characters. In the implementation of the proposed method there can be several alphanumeric input, pointing and signal generating devices connected in parallel (e.g. one mouse and one stylus) without that changing the scope of the method.

An application operating on a computer device described above could execute the visualization, grouping, sorting and management of data objects through the realization of a movement graphically representing their level of relevance to defined criteria on a device display according to the algorithm as follows.

## DETAILED DESCRIPTION

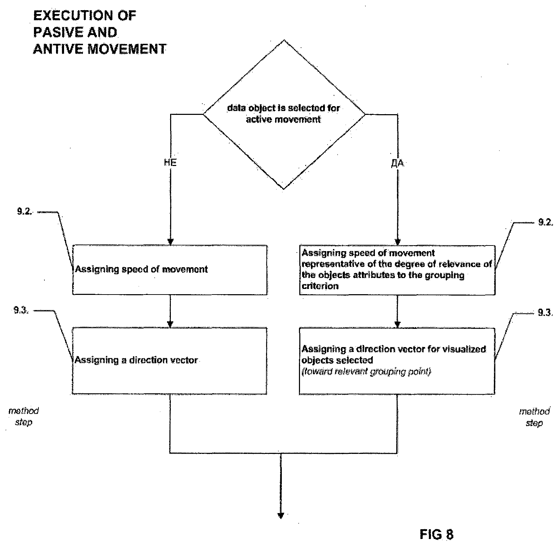

For a fuller explanation and not limitation of the method, here follows a detail description of the steps by means of which an application operating on a computer device can execute the visualization, grouping, sorting and management of data objects through the realization of a movement graphically representing their level of relevance to defined criteria on a device display (FIG. 8). This is an example and it can be implemented by the skilled in the art with different variations without that changing the scope of the proposed method. All such variations and modifications are considered to be within the scope of the present invention.

The method is executed in the following steps:

### 1. Creating a work plane

A work plane is defined comprising a field for visualizing objects and used for sorting and grouping, a field for group actions, a field with application controls for managing the application, a possible auxiliary background image, and access to application settings.

### 2. Loading of objects for visualization

The objects for visualization in the application are loaded by means of the application controls using lists of objects or structured data that are available to the device. The methods of data entry - e.g. choosing a folder or RSS channel with photographs for visualization - are widely used in current technologies and are well known to the skilled in the art.

2.1. The method allows loading additional objects at any moment after its initiation. Loading additional objects is activated from the field for application controls by user action.

2.2. The method allows loading additional objects at fixed intervals of time, which are defined in the application settings.

2.3. The method allows loading additional objects activated by a signal external to the application - e.g. occurrence of a non-null RSS at a fixed URL address.

### 3. Creating data objects with a set of available attributes

3.1. The application loads lists of objects and their attributes from the file system of the device (e.g. lists of files and folders with their attributes - like file size, creation date, etc.)

3.2. The application loads structured data from objects generated by other applications accessible to the device (e.g. a list of geolocations or e-mails, list of contacts on a social network, RSS feed). It is common practice in contemporary computer and communication technologies for such data to be stored in formats accessible and open to other applications - e.g. structured text files, XML, data stored at specific locations in the file or related files, connections to databases that are accessible to the device with the respective access tools.) The methods of extracting attributes related to objects are well known to the skilled in the art.

3.3. The application loads the graphic data available for each object from its content or on the device and uses that for creating an internal visualization of the objects. The methods of associating graphic data with objects (files) are well known to the skilled in the art.

3.4. The method allows adding to or refreshing the attributes of each of the visualized objects at any time after the method's initiation. In this case after refreshing the attributes of the object, Step 9 is executed for it again without any other changes to the method.

### 4. Creating visualizations of the objects

The visualization of objects in the method includes graphic representation and text for each of the objects. The internal visualizations are similar to the existing types of visualization of files and objects in systems for management and control and do not change the scope and of the method.

4.1. In executing the method different visualizations for any of the represented objects can be used without that changing the scope and of the method.

4.2. Through the application controls, the user can switch between different forms of visualization without that changing the scope of the method. When switching from one visualization to another, the attributes used can be those acquired in Step 3 as well as attributes acquired after initiating the method in Step 7.3.2.

The application creates visualizations comprising a representative image of the file contents (e.g. thumbnail or icon) and text, which is distributed in a structured table containing the attributes of the internal data object created in Step 3. It is clear to the skilled in the art that by means of the application controls the user can switch between one form of presenting the object on the work plane to another (e.g. from icon to thumbnail with a title placed in a container). Concerning the method every object is characterized by one point with X and Y coordinates and later on concerning the application using the method we will define that these coordinates of the whole visualized object are the coordinates of the top left point of the concrete visualization. As a consequence, switching from one visualization to another does not lead to changes in the rest of the steps of the method's execution.

### 5. Distributing the objects in the field for sorting and grouping

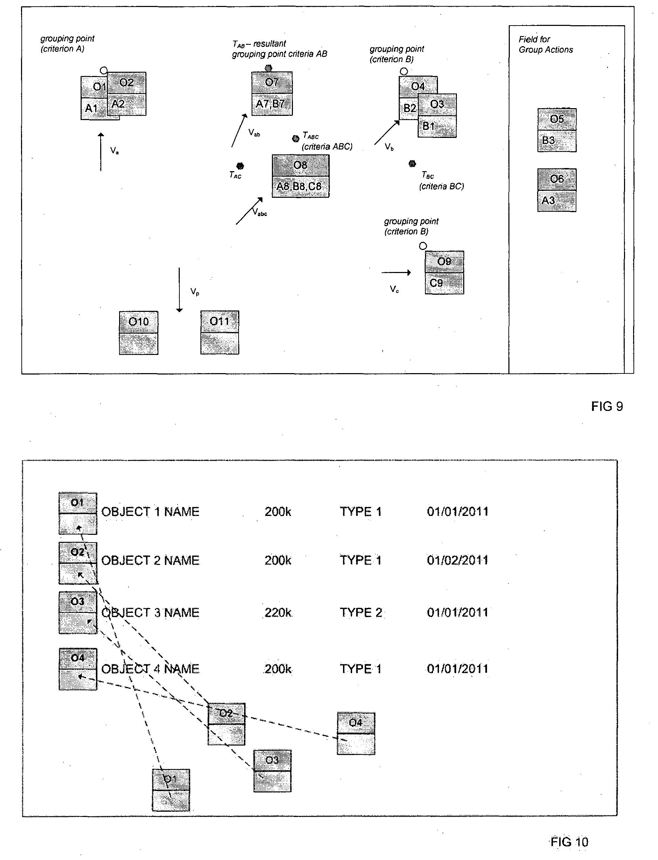

5.1. During the initial loading the application arranges the data objects within the field for sorting and grouping. For instance, they are lined side by side in the bottom left-hand part of the work plane (FIG. 10) whereby by adding a random component to each of the coordinates of the visualized objects the application leaves the user with the impression of a random arrangement. This representation has been chosen in order to assist the user in visually understanding the capabilities of the application to work with a non-list representation of the objects. It is clear to the skilled in the art that by means of the application controls it is possible to switch between the arrangement of objects described above to an arrangement of objects that has become commonly accepted in existing systems for management and control (FIG. 10). In the application controls, methods for arranging objects can be appointed as the ones used in existing systems such as sorting by creation date or object name.

5.2. After the initial distribution of the objects on the work plane, by means of a pointing device the user can relocate them to random positions in the field for sorting and grouping or move them to the group actions field.

Rearranging the objects can be used for better viewing of visualizations as well as defining the grouping points described below.

The ways for moving represented objects around the display of the device are well known to skilled in the art.

## 6. **Defining grouping points**

Every grouping point defines a field in the work plane, which is logically assigned to the grouping point and which will contain the objects with attributes relevant to the criterion associated with the grouping point in the way described below.

6.1. The user can choose a data objects to become a grouping point.

6.2. The user can create a grouping point in any point of the work plane that has not been associated with a represented object.

6.3. The user can associate an action with the grouping point to be performed on all objects that have reached the grouping point - an operation executed by the device or an application accessible to the device (e.g. send, open, see Step 11).

## 7. **Setting a grouping criterion**

7.1. The grouping criterion can be a logical expression.

Logical expressions, activated at the grouping point, have an assigned value of YES/NO when compared to the attributes of the visualized objects. An example for such an expression is the statement equal to a value of an attribute activated in the grouping point - e.g. author:NAME1 with the respective value of an attribute (author:$NAME_N$) for each of the visualized objects. In this case, the application will group all objects where the author: attribute has a value of NAME1. In more complex logical expressions a combination of two statements can be entered - e.g. for author and language of the document.

7.2. The grouping criterion can be a value representing the level of relevance to a numeric value at the chosen grouping point.

The level of relevance to a value (e.g. temperature) will show the relative level of relevance of the respective attributes values of each of the visualized objects to the value of the attribute activated in the grouping point.

The methods of entering logical expressions and executing logical operations are well known to the skilled in the art and in general do not influence the scope of this method. However, because of their importance to the practical implementation of the applications based on this method some of them will be reviewed in Step 7.3.

7.3. In creating the logical expression, the user can use attribute values in the following ways:

7.3.1. The user can choose an attribute value from the list of the attributes loaded in Step 3 and associated with the attributes of visualized objects.

7.3.2. The user can extract additional attributes, which were not available at the moment of loading the represented objects (Step 3.4), by accessing a visualized object (e.g. a file) or data related to it (e.g. words used in the body of a text file and their frequency of occurrence or a mnemonic address closest to geolocation coordinates extracted from a database accessible to the device).

7.3.3. By user action (e.g. entering a search term from the keyboard or through voice recognition).

7.3.4. From the application controls the user can load criteria saved from a previous execution of the method.

7.3.5. From the application controls the user can load attribute values from a list accessible to the device.

7.3.6. All types of internal sensors and device periphery can be used as means of user input of attribute values without that changing the scope of the method (e.g. GPS location, barcode scanner, temperature sensor, incoming call identificators).

8. **Activating the grouping process**

9. **Assigning speed of movement representative of the degree of relevance of the objects attributes to the grouping criterion and a direction vector for each of the visualized objects**

9.1. Selecting the data objects for active and passive movement

9.1.1. The objects selected for active movement meet the following criteria:

- They are not placed in the field for group actions;
- They are not assigned to a grouping point;
- The user has not initiated a signal for interrupting the object's movement;
- Respective attributes of the data object are relevant to the logical expression defined by the user or have a non-zero attribute value relevant to the activated measurable value.

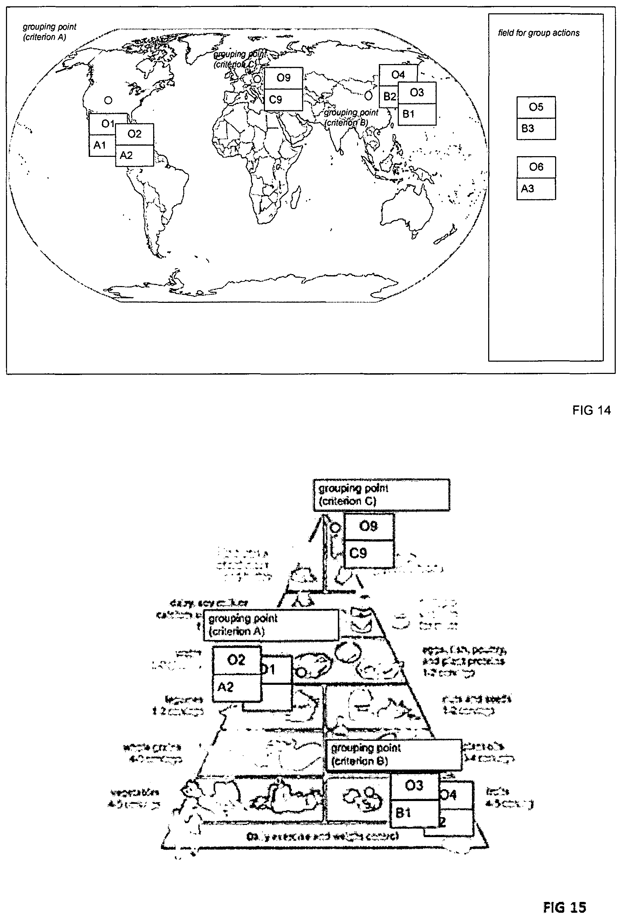

9.1.2.The application selects all remaining objects for passive movement. The default direction of the passive movement is towards the bottom part of the screen. In the application settings the direction of the passive movement can be set to coincide with the physical lower part of the display if the device has a position sensor (FIG 15). It is clear to the skilled in the art that variations in the direction of the passive movement are possible without changing the scope of this method (e.g. movement along the active movement vector but in a direction opposite to the centre of attraction - in this case objects that do not possess the attribute relevant to the logical expression in the grouping point will move toward the outer rim of the work plane).

9.2. Defining the speed.

9.2.1.If the grouping criterion has a numeric value, the application distributes the data objects that have been selected for active movement in groups according to their level of relevance. The objects in different groups are assigned different speeds. In all other cases the data objects that have been selected for active movement are assigned the maximum movement speed.

9.2.2.The number of groups representing the degrees of relevance to the grouping criterion can be defined by the user in the application settings. Depending on this setting, results can be achieved that reflect different ways of grouping objects in the material world:

- When the number of groups is set to 0, all objects move towards the grouping point at a speed proportional to the level of relevance of their respective attribute values to the grouping criterion;
- When the number of groups is set to 1, a Boolean type sorting of the objects is performed such as whether the object possesses a certain attribute value or not;
- When the number of groups is set to more than 1, the movement is performed at pre-assigned speeds, corresponding to the use of comparative degrees in speech (e.g. 4 groups by geolocation corresponding to *nearest, near, far,* and *farthest).*

The number of groups as well as the maximum number of objects admissible in the group representing the most relevant results, can be defined by the user in the application settings and changed during the execution by means of user action without that changing the scope of the method. In this way the user can control the number of objects distributed in the group corresponding to the *nearest* criterion in the example above.

9.2.3.The data objects that have been selected for passive movement are assigned a speed equal to the maximum active movement speed in the steps above.

9.2.4.The speed of movement can be defined in the application settings and changed during the execution by user action from the application controls without that changing the scope and of the method.

9.3. Calculating the vector of movement.

The vector of movement can be calculated by various algorithms, which are well known to the skilled in the art, without that changing the scope of the method. In this example of the method's implementation in one discrete time unit the application moves the objects along a vector calculated with the following algorithm:

- If $x_c$, $y_c$ are the coordinates of the attraction point (grouping point) and $x_o$ and $y_o$ are the coordinates of the data object, the vector of movement is:

$$x = x_c - x_o$$

$$y = y_c - y_o$$

$$v_0 = (x, y)$$

We normalise to a single vector:

$$k = \frac{1}{\sqrt{x^2 + y^2}}$$

$$v_1 = k \times v_0$$

If we indicate the speed chosen in Step 9.2 by s, we get a vector of movement for a discrete time unit of:

$$v = s \times v_1$$

It is obvious to the skilled in the art, that in calculating the vector of passive movement it is only important that it is not directed to a grouping point, which allows different variations in appointing both the vector and the speed of the passive movement. Defining the speeds and dispatching the objects into groups according to their level of relevance to the grouping criterion can be calculated by means of other algorithms, well known to the skilled in the art, without that changing the scope of this method.

10. **Moving the objects with the assigned speed and vector of movement.**

10.1. During the passive or active movement of the data objects, the user can interrupt their automatic movement and rearrange them manually. After the user action is interrupted Step 9 is performed for the object in question. If the user has moved the object to the field for group actions the data object remains there and its movement is terminated, otherwise it begins moving with a vector and speed corresponding to its new position.
10.2. The movement is terminated when the objects selected for active movement reach the grouping point and the objects selected for passive movement reach the bottom part of the screen.

11. **Grouping the objects in the grouping points and managing the objects**

11.1. Upon reaching the grouping points, the objects are associated with a group.
11.2. The application performs the predefined default group management actions (Step 13.1) on all objects in each group.
11.3. The application performs the specific actions defined in a specific grouping point (Step 6.3) on each of the objects in that point.
11.4. The user can perform bulk management actions on all objects in the group.
11.5. The user can perform bulk management actions on all objects placed in the field for group actions.
11.6. The user can perform individual management actions of each of the objects on the work plane.
11.7. The user can terminate the association of an object with a group by means of user action on the object or from the application controls.

In the cases when there are no predefined actions, we have a situation of simple sorting and grouping without management. The user can perform bulk management actions on objects after they have been grouped. Bulk management actions can be chosen from the ones executed by the device (e.g. *send all files in the group via email)*.

After grouping, the objects can be moved as one unit around the field for grouping and sorting or to the field for group actions. For the needs of management the field for group actions is considered a grouping point with the possibility of defining default actions (Step 13.1), which can be performed at the moment of placing an individual object or a group of objects into the field.

The methods of representing and managing groups of objects, e.g. placing them in a *container,* are well known to the skilled in the art.

**12. When several grouping points are activated, the application executing the method creates resultant points representing the interaction of any of the possible sets of grouping points. (FIG. 9)**

12.1. The coordinates of the resultant point X,Y can be calculated in the following way:

if the user has activated N grouping points possessing coordinates $X_1 ... X_n$, $Y_1 ... Y_n$ and weight factors $k_1 ... k_n$, then for the resultant point:

$$x = \frac{\sum k_n x_n}{n}, y = \frac{\sum k_n y_n}{n}$$

The weight factors correspond proportionally to the abstract load on the apexes of a polygon defined by the coordinates of the chosen grouping points. The resultant point represents the abstract centre of gravity of a polygon with apex loads proportionate to the weight factors of the chosen grouping points.

Example: two grouping points with equal weight factors create one resultant point located in the middle of the segment between the two grouping points. When there are 3 grouping points, a total of 4 resultant points is created. (**FIG. 9**)

12.2. Each resultant point is associated with a logical and of all the grouping criteria associated with the grouping points defining the polygon. (**FIG. 9**)

Logical operations associated with the grouping criteria:

If we designate:

the presence of attribute A in any of the visualized objects as logical operation A
the presence of attribute B in any of the visualized objects as logical operation B
the presence of attribute C in any of the visualized objects as logical operation C

Then the logical operations associated with the grouping criteria in the resultant grouping points and the user-defined grouping points will be as follows:

| $T_{ABC}$ | - | operation | A | $\cap$ | B | $\cap$ | C |
|---|---|---|---|---|---|---|---|
| $T_{AB}$ | - | operation | A | $\cap$ | B | | |
| $T_{AC}$ | - | operation | A | $\cap$ | C | | |
| $T_{BC}$ | - | operation | B | $\cap$ | C | | |
| $T_{A}$ | - | operation | A | | | | |
| $T_{B}$ | - | operation | B | | | | |

$T_C$ -operation C

In those cases when the grouping criterion consists in relevance to a numeric value, the YES value of the logical operation is the criterion set in step 9.1.1.

In Figure 9, object 07 possesses attributes A and B and moves toward the resultant point of grouping points A and B, which in this case is placed in the midpoint of the AB segment as the grouping points have equal weight factors. Object 08 possesses attributes A, B and C and moves toward the resultant point of grouping points A, B and C, which in case of equal weight factors is located in the centre of gravity of the ABC polygon.

For each grouping point and resultant grouping point, created in Step 12.1, this method creates a group for associating objects possessing the grouping criterion described in Step 12.2. Each object for visualization is assigned to the respective group the resultant point of which is created from the interaction of the set with most elements and the visualised object meets the respective grouping criterion.

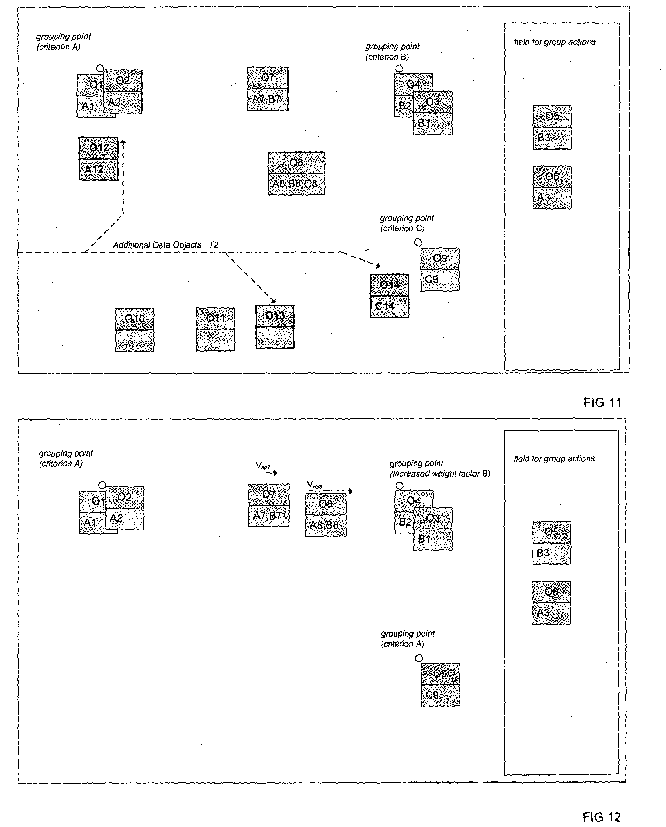

12.3. The user can change the weight factor of a grouping point during or after the execution of the method. (**FIG. 12**)

12.4. After having defined the grouping points, the user can save the configuration for future use by the application controls. Together with the configuration of grouping points the user can also save the auxiliary image chosen in Step 3.1 - e.g. a map, coordinate system, warehouse plan. The combination of grouping points and an auxiliary background image will be referred to as a graphic attribute mask.

### 13. **Setting default parameters for executing the method and default actions for managing objects from the application controls field.**

13.1. In the application settings the user can define the default actions to be performed upon placement in the field for group actions or upon arrival at all grouping points - e.g. sending an email with the contents of the file represented by the visualized object. At each grouping point the user can define individual actions to be performed with the objects upon arrival.

13.2. The speeds of movement, number of groups by relevance, way of ordering objects and forms of visualization can be changed in the application settings without that influencing the scope of this method.

13.3. In the application settings the user can enter lists of default attribute values that have not been retrieved from the represented objects (e.g. keywords).

13.4. In the application settings the user can enter lists of sources of objects for visualization (e.g. RSS feeds, links to external databases).

13.5. In the application settings the user can define external events, which would prompt a refresh of the visualized objects and loading of additional objects. (Step 2.4)(e.g. Incoming call or SMS for a mobile device)

13.6. In the application settings the user can appoint additional peripheral devices for the input of grouping attribute values (e.g. barcode scanner, GPS, temperature sensor in a device).

13.7. From the field with application controls the user can choose a background image for the work plane, which will aid their work with the objects (e.g. coordinate system, a map with geographic locations).

### TECHNICAL NOVELTY AND ADVANTAGES OF THE INVENTION

The basic novelty of the proposed invention is the possibility for represented objects to actively interact with each other on the display of the device. The active interaction between the objects has a graphic reminiscent of the way material objects interact in space. Gravity creates attraction between objects that is proportionate to their mass. In a similar way, in the proposed here method the attraction between objects is proportionate to the level of relevance of their attributes, which is represented by the movement of the objects toward the defined points at a speed representing the force of attraction. This model is completely comprehensible to users based on their life experience.

The objects are arranged around the whole work plane, avoiding the one-dimensional model of visualization on fixed positions used by the existing methods of representation of objects on computer devices.

The execution of movement of the represented objects at a speed representing the level of relevance of their attributes to the defined sorting and grouping criteria allows the visualization of additional graphic information about each object and the way it compares and interacts with the rest of the represented objects. In existing systems the level of relevance of the object to the search criteria and comparing this level to the level of relevance of the rest of the represented objects to the criteria are not represented graphically.

The results of searching and sorting operations in the proposed method are graphically represented by means of the movement of objects that allows the user to monitor simultaneously the level of relevance of each of the represented objects to each of the sorting criteria, to refine the criteria in accordance to the graphic representation of the search and sorting results while from the user interface point of view the execution of all criteria is simultaneous, to manage data with considerably lesser knowledge of the organization of data on the device and with no knowledge of the formal query language. The user can search and sort objects by choosing a sample object and defining the attributes it possesses that they are interested in (e.g. *date* or *location*).

The graphic presentation of searching and sorting operations in the form of movement of objects allows the user to perform individual and bulk actions on objects during the execution of the method in an easier and more intuitive way with no need to define exact criteria in advance or to use final results organized in the traditional list view employed by existing systems. The difference between this method and existing systems in sorting and searching within a set of represented objects is illustrated in comparison in **Fig. 9** and **Fig 4.**

After choosing a sample object, the proposed method allows the graphic visualization of the level of relevance of that object to other objects according to criteria that are defined to be represented in a much more interactive way compared to existing systems. The proposed method allows the user to operate with objects without defining a strict search algorithm. The method allows for the work plane to be used in a new way, avoiding the limitations of the employment of the fixed positions for representing objects.

The implementation of the proposed method will significantly simplify the work of the user with computer and communication devices. The implementation of the method in touch-screen devices for personal use will be especially convenient.

As a result the following will be achieved:

- Significant reduction of the number of actions required for the input of necessary search criteria.
- Convenient graphic representation of the level of relevance between different objects.
- Reduction of the additional text data input as well as a much less restricted way of defining the level of accuracy of the numerical values (e.g. when a date is defined in the proposed method objects are assigned different speeds based on their level of relevance depending on the number of objects on the work plane with no need to explicitly define a confidence interval).
- The proposed method allows better use of the capabilities of contemporary pointing devices - mice, touchscreens, and stylus.
- The proposed method offers an alternative to stratification of the list-type data organization and is much closer to the natural way, in which people choose objects in the material world.

When a person is picking fruit from a display they usually do not start with a clearly formulated query of the type of *I am looking for 12 pieces of fruit containing 100 calories each, with and unbroken epidermis and which will reach ultimate level of ripeness in 3 days.* In the real world we just pick out fruit that ultimately turns out to meet these criteria. In the same way, with the proposed system finding a photo we are interested in can be done with 2 simple pointing device actions instead of formulating 4 queries in a formal language and reviewing 3 lists.

**DESCRIPTION OF THE FIGURES**

**FIGURE 1. General scheme of the method - objects that possess attribute A are attracted to the grouping point**
The figure shows an activated grouping point with criterion *presence of attribute A.* Objects 01 and 02 possess attribute A and begin active movement toward the grouping point. In the example the value of attribute A2 is larger than the value of attribute A1. Because of that the speed of movement for object 02 is higher that the speed of object 01 (A2 > A1, $V_{a2} > V_{a1}$). Objects 03 and 04 do not possess attribute A and thus begin a passive movement toward the lower part of the screen at speed Vp. Objects 05 and 06 have been relocated in the field for group operations thus remaining immobile regardless of their attributes.

**FIGURE 2. Level of Technology - common list representation of objects in a system for access and control on a computer device**
The visualization of the objects includes a graphic representation (and icon or thumbnail, name, size, type on the object and last modified date). The objects are ordered on fixed positions Y1...Y5 by one of their attributes - in this case name.

**FIGURE 3. Level of Technology - common list representation of objects in a system for access and control on a computer device**
The visualization of the objects includes graphic representation (icon and name). The objects are ordered on fixed positions Y1...Y5 by one of their attributes - in this case name.

**FIGURE 4. Level of Technology - common mechanism for additional sorting and searching in a list of objects**
The visualization of the objects includes graphic representation (icon and name). The objects are again ordered by fixed positions Y1...Y5 by one of their attributes - in this case name. In case of additional sorting and searching new work fields are used to set new criteria from accessible attributes. The new search and sorting is performed either on the existing list or on another set of objects. The new search and sorting in general is independent of the presented list while the result is still visualized as a one-dimensional list ordered by one attribute Y1...Y5.

**FIGURE 5. General diagram of a computer device executing the method**

The functional block-scheme of a computer device comprising : a data bus for communicating information(109), a processor coupled with the bus for processing information and instructions(101), a random access memory (RAM) (102) coupled with the bus for storing information and instructions for the processor, a read only memory (ROM) (103) coupled with the bus for storing static information and instructions for the processor, a data storage device such as a hard drive or flash memory (103) coupled with the bus for storing information and instructions, a display device coupled to the bus for displaying information to the computer user (104), an alphanumeric input device including alphanumeric and function keys coupled to the bus for communicating information and command selections to the processor (105), a cursor control device coupled to the bus for communicating information and command selections to the processor (106), and a signal generating device coupled to the bus for communicating command selections to the processor(107).

**FIGURE 6. Scheme of a computer device executing the method**

**FIGURE 7A. Block diagram of the method (first part)**

**FIGURE 7B. Block diagram of the method (second part)**

**FIGURE 8. Scheme of the method active and passive movement implementation**

**FIGURE 9. Implementation of the method with three activated grouping points**

Object 07 possesses attributes A and B and moves toward the resultant grouping point by both A and B which in the case of equal weight factors is located in the centre of line AB. Object 08 possesses attributes A, B and C and is moving towards the resultant grouping point for A, B, C whereby in this case the weight factors are equal which places it in the weight centre of the ABC polygon.

**FIGURE 10. Transition from free to list organization while implementing the method**

**FIGURE 11. Visualization of a new set of objects after the execution of the method and without losing already visualized results**

**FIGURE 12. Changing the weight factor of a grouping point after the visualization of the objects**

Figure 12 shows how the method will react after changing the weight factor of the activated grouping attribute in point B. When the user increases the weight factor of B from 1 to 1.5 the objects 07 and 08 located on the AB axis that possess both attributes A and B move a calculated distance along the axis toward point B proportionate to the B7 and B8 values. In this case B8 is larger than B7 and thus object 08 moves closer to grouping point B than object 07.

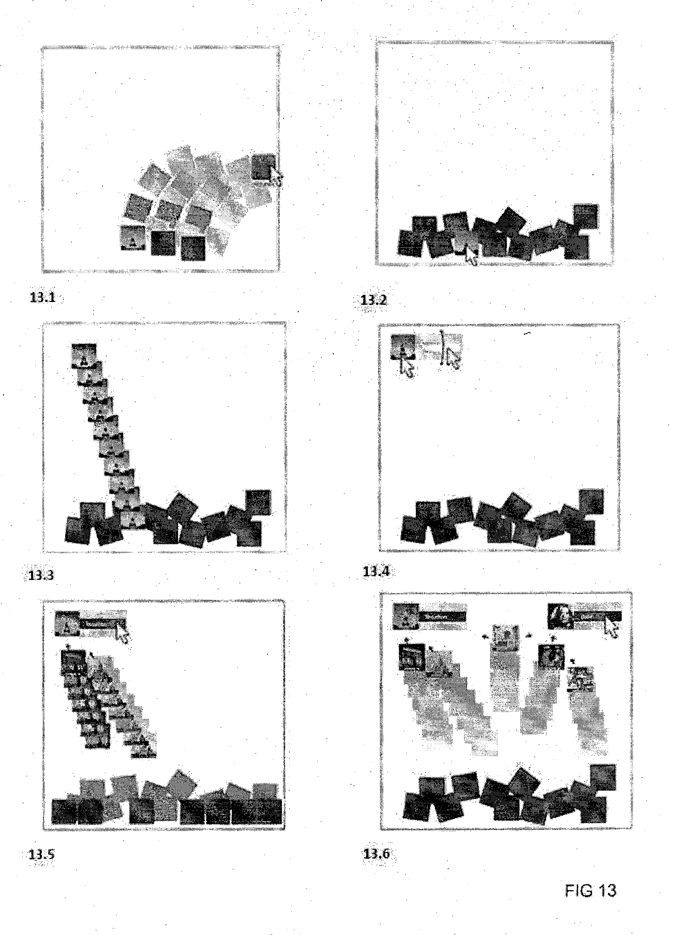

**FIGURE 13. General scheme of work with an application for viewing, grouping, sending, tagging and sharing images using the method**

**FIGURE 14. An example for a saved attribute mask and grouping points - geographic information**

**FIGURE 15. An example for a saved attribute mask and grouping points**

Graphic representation of a classification - in this case a nutritional pyramid. The objects demonstrated in Fig. 14 (**geographic information - attribute mask**) can also be saved and therefore transitioned from one saved set of grouping attributes and auxiliary images to another.

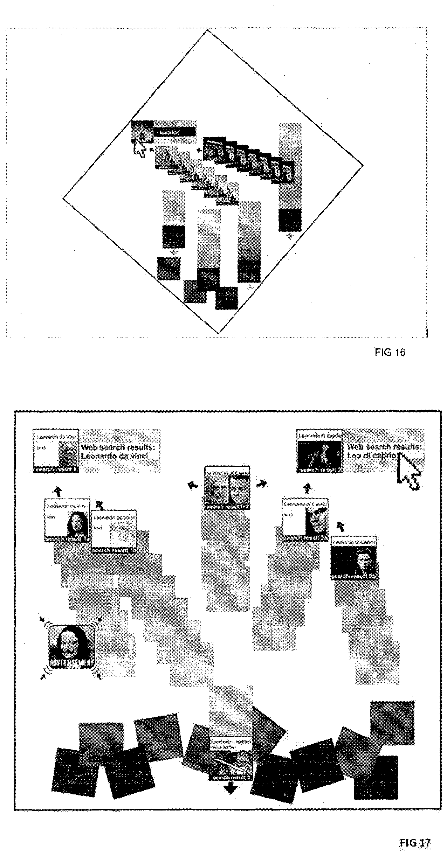

**FIGURE 16. General scheme of matching logical and physical bottom screen areas using a device censor**

**FIGURE 17. Visualizing data received from an Internet search engine**

## EXAMPLES OF INTENDED USE OF THE INVENTION

The implementations listed below are illustrative and do not restrict the scope of possible uses of the method of this invention.

**Image viewing, grouping, sending, tagging and sharing application (FIG 13):** A typical example of how the method can change and improve the interaction of the user with the computer device is the collection of personal photos. In the currently existing organization of the objects, photos are stored in collections usually according to the date when the photo was taken - e.g. Vacation Photos 2010 or New Year's Eve Party 2011. There are many systems for viewing, grouping, sending, tagging and sharing photos. However, none of them comes close to the natural approach of browsing through a pile of photo printouts where the user creates associative chains unexpected even to themselves. When using an application bases on this method, the user will be able to load the contents of several folders (Step 2) onto the work plane (Step 1) (FIG 13.1). The application loads the accessible information about the photos (e.g. date taken, geolocation coordinates or tags such as names of participants) (Step 3.1 and 3.2). After the application creates an internal visualization for each of the objects (Step 4) and arranges them on the work plane (Step 5.1), the user can rearrange the objects manually (Step 5.2) and choose a photo they are interested in (e.g. of them and their children at the see shore). The application has already loaded the dates and geolocation coordinates of the photo. After relocating the object to a chosen point of the work plane, that will become a grouping point (Step 6) (e.g. the top left-hand corner of the screen) (FIG 13.3), the user can choose an attribute they are interested in - e.g. geolocation (Step 7.1) (FIG 13.4). After initiating the grouping (Step 8), the application distributes all photos according to their level of relevance to the chosen criterion and assigns each a respective vector and speed of movement (Step 9). As a result all the photos made at that location (the vacation spot), even on different years, begin moving (Step 10) towards the grouping point while all the rest begin moving towards the bottom part of the display (FIG 13.5). Even during the movement the user can choose another photo (e.g. taken on a previous year) and relocate it (Step 10.1) to the top right-hand corner of the screen where they activate a new grouping point with an attribute *year* (FIG 13.6) (Step 12). In this case the photos that are relevant to the new criterion only stop moving toward the bottom of the screen and start toward the new grouping point in the top right-hand corner. The photos that are relevant to the geolocation criterion only (vacation spot) continue their movement toward the top left-hand corner of the screen. The photos that were taken at the vacation spot on the chosen year go to the equilibrium point between the two grouping points (Step 12.1.) (the top middle part of the screen). During the movement as well as after the objects have reached the grouping points, the user can move photos they have picked (e.g. the ones they like most) to the group actions field. The user can then perform bulk actions (e.g. *send by e-mail* or *share)* (Step 11) with all the objects in the group actions field or all the objects in a grouping point (Step 11.2). The user can perform individual actions on any of the visualized objects at any time (Step 11.3). As was described in Steps 11.2 and 11.5, in the application settings (Step 13.1) the user can define default actions (e.g. *print all relevant photos*). This approach can be particularly effective for tagging photo content.

If the user has defined a number of relevance groups (Step 9.4.2) (e.g. 4), the photos taken at the same beach will move fastest toward the grouping point while the ones taken close to the vacation spot but outside its limits will move slowest. The number of groups, maximum number of results and the speed of movement can be defined in the general settings panel of the application implementing the method and can be altered during the method execution (Step 13). It is obvious to the skilled in the art that the photos can be stored not just on the device but also in remote databases accessible to the device (e.g. through the Internet). The method can load attributes of the visualized objects received from other applications (Step 3.2) (e.g. results yielded by an image recognition programme). In this way (step 12) complex sorts can be performed like: retrieving all images of the same two people together at a certain place and time. The user can define this request by rearranging sample objects on the work plane and activating criteria from accessible image attributes without having to use a complex computer device query language. The user can add to the work plane an auxiliary background image like a geographic map (Step 13.7) and save the grouping point configuration for future use (Step 12.5).

It is obvious to the skilled in the art that if connected to an external database this system could be widely implemented not just for personal use but also on a professional level in the fields of law enforcement and counterterrorism for instance. If using at the same image databases, image recognition software results, geolocation data received through mobile communication networks (e.g. cell ID), financial transaction databases related to people, etc., the system operator will be able to quickly track and discover connections among individuals and groups in a graphic form.

**Database Search Interface** (e.g. in a patent database). Through executing the method on databases accessible to the device (Step 3.2.) the time needed for performing patent searches can be significantly reduced. After starting the application on the work plane grouping points by keyword and class/subclass are activated. The application retrieves all patents in the chosen classes/subclasses from the abstract database. For each of the patents relevant to the grouping criteria (Step 12.2) the application creates a visualization (step 4) including an image from the figures database, information about the country, etc. The objects start moving towards the grouping points (Step 10). The user can observe which of the patents are most relevant to the defined search criteria and to narrow the search by adding new criteria from the list of attributes of any of the patents (e.g. a subclass of the most relevant patent) (Step 7.3.2) or by entering new criteria (e.g. entering a new search term seen in the title of a patent) (Step 7.3). After entering the new criteria, new objects are retrieved from the database (Step 2.1) that had not been included in the list of visualized objects after applying the initial criteria set. In any grouping point the user can enter criteria comprising a logical expression like *containing both Word 1 and Word 2* (Step 7.1). The skilled in the art are well aware of the methods for entering logical operations by means of auxiliary interfaces like, for instance, choosing an element executing logical *and* from a list. After activating the new grouping points, the new objects begin moving towards their respective grouping point without that affecting the previous configuration of the work plane. If needed, the user can retrieve additional criteria by accessing detailed object information (Step 7.3.2) (e.g. by accessing the full text of the patent and the count of most used terms from the data dictionary chosen in the application settings) (Step 13.3). The user can move patents of interest to the field for group actions after or during the graphic representation of the relevance of sorted objects and there they can perform different actions like: printing the whole patent, sending by e-mail, copying to another database, viewing images, etc. After reaching a satisfactory result the user can save the sorting and grouping configuration (Step 12.4) for use in similar searches with the same graphic definition of the work plane and the same criteria on other data sets (e.g. tracking new patents in a certain technical field or linked information from other sources like news channels) (Step 3.2). Saving the grouping points together with an auxiliary background image (Step 12.4) allows the creation of convenient work templates to be applied to groups of patents (e.g. an attribute mask of countries of the world can be applied to the patents in the field for group operations in which case they will move toward their country of origin or they may be sorted according to a graphic scheme of patent classes) (FIG. 14 and 15).

**Visualizing data received from an Internet search engine (FIG. 17)**

The method can be especially useful to users in organizing the results extracted by Internet search engines. Through the tools described above and in particular the retrieval of data after the initiation of the method (Step 7.3.2) and the use of attribute masks (Step 12.4) the user can narrow the search without defining a new request. This allows creating several grouping points on the same displayed work plane, which cannot be displayed on the same screen within a traditional list view. Apart from the better and faster visualization of the level of relevance of attributes, with this method a much larger number of objects can be displayed in an understandable way. Same number of objects in a traditional list view would have to be displayed on separate scroll pages. The method allows for new ways of visualization of marketing content on search engines. With it relevant advertising objects can be created that differ in representation from the remaining internal visualizations (e.g. hyperlinks to sites relevant to the attributes activated by the user). Advertising objects can show up 5 seconds after the active movement of the objects appointed by the user has been completed. Advertising objects can perform active movement toward grouping points that represents the degree of relevance of the proposed advertised item to the active search criteria set.

**File management system on a computer device**

It is evident to the skilled in the art that the proposed method can be used in all cases where files are visualized (e.g. file management applications in operational systems, personal computer desktops, prompt windows for selecting files in an office application). As the figures (FIG. 2, FIG. 3) demonstrate, contemporary systems allow switching between different object representation views. According to Step 5.1, the arrangement of the objects on the work plane proposed by this method can simulate any of the well-known traditional list models of object representation while retaining the possibility to activate grouping points and sorting objects. This logically implies that that this method can be integrated as an additional view in existing systems. For example when opening a file in an office application, this allows us to choose a sample object from a folder containing documents (e.g. a text file tagged by author) and to activate a grouping point by attribute. Then a second object can be chosen (e.g. a file with a keyword in the name) and a new grouping point can be activated. As a result of these actions the user can immediately see the degree of relevance to the desired criteria, while retaining the full functionality of existing file systems. The saving of attribute masks described above (Step 12.4) and the ability to load additional objects (Step 2.1) creates the possibility to include more objects without removing the already extracted results from the screen. This mechanism can add the contents of a new document folder to the already visualized objects from the first folder, etc.

**Integration of data from applications operating on a mobile device and information from social networks.**

This method can be very convenient for sorting and managing data on a mobile device. The easy and intuitive way of working with the method as well as the ease of use when the pointing device is a finger on a touchscreen make the method appropriate for creating applications for mobile devices. Based on the lists that are available on the device (Step 3.2) like contacts, calls, emails, meeting schedule (calendar), etc. the application executing the methods will provide the user with a very intuitive means of access to the data on their device. If in the work plane, the user defines grouping points associated, for instance, with several contacts that are specifically important to the user the application can track (in Step 2.2 - by time intervals - or Step 2.3 - by events) whether the incoming calls and data are important and define actions to be performed by the device (e.g. automatically accepting or rejecting an incoming call). Upon receiving a text message, email or an incoming call, the application proceeds to loading new objects for visualization (Step 2.1). Let us examine a case where 5 new emails are received 1 of which possesses an attribute relevant to a criterion in a grouping point. The application creates 5 new object visualizations and 4 of those objects begin passive movement toward the bottom part of the screen while 1 (sent by a defined above specifically important contact) moves toward the grouping point associated with the respective specifically important contact. If the application controls the user has set a sound signal to be played upon arrival at the grouping point, the application plays that ring-tone (Step 11). The user can view the work plane and perform actions with the newly received data. It is clear to the skilled in the art that a similar scheme can be used for the visualization of different types of information exchanged on a social network.

**Processing of warehouse and logistic information.**

The method is suitable for the implementation of logistic and warehouse management systems. In an application displaying pending orders those can be visualized on the work plane in predefined grouping points representing the delivery address (on a map) or the location of goods on the plan of a warehouse or a vehicle. The capabilities of this method to employ peripheral devices as means of input, like a bar code scanner (Step 7.3.1), allow it to automatically visualise for instance the location of goods on the plan of the warehouse. A useful implementation can be achieved when using a temperature sensor (Step 7.3.1) in a warehouse for perishable goods. By creating a grouping point for *goods that will perish in the next 3 days at the current temperature,* after initiating the active movement the user can move all the goods that meet that criterion to the group actions field and perform the action *generate loading list.* The user will also get a visual idea of what goods will spoil the soonest. If they activate grouping points on the work plane with all the orders received, after the second initiation of the active movement the first grouping point will only contain the reminder of goods at risk of perishing for which there are no orders placed yet. In the cases when the computer device is placed in a car and receives data from an internal or external GPS device, the user can, without any additional action on their part, receive a clear visual idea of which goods are to be offloaded in the current location on their root and which are to be offloaded in the next.

**Real time Data Visualization and Management**

The proposed method is suitable for the integration of different data channels and for demonstrating the connections between them. In case of an application for monitoring data feeds of stock values from one source and news from another (**Step 2.1** and **Step 3.2**), the user can create a work plane with keywords like *petrol,* company names and logical expressions like *share value change* >= *1%* (**Step 7.1**). When setting the desired refresh time rate of the visualized objects and the sources, on the work plane the user can receive stock ratings and news about the companies at the same time while getting a visual representation of the level of relevance of the publications. Thus if a news article is related simultaneously to the keyword *(petrol)* and one of the chosen company names and the respective company share value has marked a 1% rise, it will immediately start moving towards the resultant point on the work plane. If the user has defined an automatic action in the grouping point (**step 11**), the application can forward the information to an email address or perform any desired action.

**Claims**

1.   Method for visualization, grouping, sorting and management of data objects through the realization of a movement graphically representing their level of relevance to defined criteria on a device display comprising:

   creating a work plane comprising a field for visualizing objects and used for sorting and grouping, a field for group actions, auxiliary background image, and an on-screen controls field;
   input of objects for visualization;
   creating data objects containing a respective set of the attributes available for visualization for each object;
   creating data object visualizations;
   arranging the data object visualizations in the field for sorting and grouping;
   allowing the rearrangement of data objects visualizations in the sorting field or the field for group actions by means of a pointing device;
   defining, by the user, a grouping point on the work plane;
   defining, by the user, a grouping criterion at the grouping point such that data objects with attributes relevant to the grouping criterion associated with the grouping point move towards the grouping point; and
   activating a grouping process comprising:

      defining active movement speed relative to the level of relevance to the grouping criterion and movement vector pointing to the grouping point for the objects that meet the grouping criterion;
      defining passive movement speed and movement vector not pointing to the grouping point for the objects that do not meet the grouping criterion;

moving the objects with the defined speeds and movement vectors,

wherein the objects that meet the grouping criterion are distributed according to their level of relevance in groups the number of which is managed by the user and which have equal speeds and vectors of movement within the group;

defining another group for the objects that have reached the grouping point; and

performing default actions on the grouped objects in the grouping point,

wherein a combination of the defined grouping point and the auxiliary background image is a graphic attribute mask that visualises an attribute relevant to the grouping criterion, and in arbitrary points on the work plane, an arbitrary number of grouping points is activated based on grouping criteria and a weight factor,

the method further comprises:

creating resultant points representing the combination of any possible set of grouping points;

creating resultant grouping criteria calculated by the logical multiplication, "Conjunction", of the criteria for any of the possible set of grouping points;

creating groups based on the resultant grouping criteria for assigning objects;

assigning the visualized objects that meet the grouping criterion to the respective group, the resultant point of which is created by means of the set representing the combination with the most grouping points, wherein each assigned visualised object meets the respective resultant grouping criteria; and

realising a movement of every visualized object toward the point associated to the group to which the respective object is assigned.

2. The method of claim 1 wherein the pointing device can be a computer mouse, stylus, finger or any other device providing input signal for the position of the cursor on the display or any other device that visualizes graphic output of a computer device.

3. The method of claim 1 wherein the objects for visualization are entered by means of object lists or structured data accessible to the computer device like but not exclusive to device file system lists, RSS channels, local or distant databases accessible to the device.

4. The method of claim 1 wherein the objects visualized in the field for sorting and grouping or by means of a command can be arranged in a list type visualization of represented objects while retaining the functionality of the graphic representation method.

5. The method of claim 1 wherein the passive movement vector of the objects that are not relevant to the grouping criterion is set by means of employing the movement or other sensors of the device resulting in the replacement of the conventional default bottom part of the display with the physical bottom part of the display according to the device's position in space.

6. The method of claim 1 wherein grouping criteria are defined by one of:

means of a choice of information about the represented object available to the file system of the device;

means of a choice of information available on the device about the represented object generated by other applications;

means of a choice from initially available to the device lists and databases;

means of sensors or peripheral available to the device; or

means of a choice of attributes retrieved by means of access to the visualized object by the application executing the method or by receiving results from another application accessing the visualized object or objects related to it and accessible to the device.

7. The method of any preceding claim wherein during or after its execution one or more weight factors that are associated with grouping points are changed.

8. The method of any preceding claim wherein during or after its execution the configuration of grouping points and the auxiliary image are saved for future use.

9. The method of any preceding claim for visualizing objects resulting from actions performed by other applications executed by or accessible to the device.

10. The method of claim 9 for visualizing objects resulting from a user action in another application, the results of which are visualized by the device.

11. The method of claim 9 for visualizing objects, results and list of multiple applications accessible to the device.

12. The method of claim 9 for dynamic addition of objects for visualization resulting from an action in other applications after the grouping points have been defined where no obligatory user action is required.

13. The method of claim 12 for visualizing in real time results from other applications on the display of a device, or at defined intervals of time results from other applications on the display of a device.


**Patentansprüche**

1. Verfahren zur Visualisierung, Gruppierung, Sortierung und Verwaltung von Datenobjekten durch die Realisierung einer Bewegung zur grafischen Darstellung ihrer Relevanzstufe für die festgelegten Kriterien auf einem Vorrichtungsdisplay, umfassend:

Erstellung einer Arbeitsebene, umfassend ein Feld zur Visualisierung von Objekten, welches zur Sortierung und Gruppierung verwendet wird, ein Feld für Gruppenaktionen, ein zusätzliches Hintergrundbild und ein Bildschirmfeld mit Bedienelementen;
Eingabe von Objekten zur Visualisierung;
Erstellung von Datenobjekten, die ein jeweiliges Set der zur Visualisierung eines jeden Objekts zugänglichen Attribute enthalten;
Erstellung von Datenobjekt-Visualisierungen;
Anordnung der Datenobjekt-Visualisierungen in dem Feld zur Sortierung und Gruppierung;
Erlauben der Neuanordnung von Datenobjekt-Visualisierungen in dem Sortierfeld oder dem Feld für Gruppenaktionen mithilfe einer Zeigevorrichtung;
Festlegung eines Gruppierungspunkts auf der Arbeitsebene durch den Benutzer;
Festlegung eines Gruppierungskriteriums an dem Gruppierungspunkt durch den Benutzer, so dass die Datenobjekte mit Attributen, die für das mit dem Gruppierungspunkt verbundene Gruppierungskriterium relevant sind, sich in Richtung des Gruppierungspunkts bewegen; und
Aktivierung eines Gruppierungsprozesses, umfassend:

Festlegung der aktiven Bewegungsgeschwindigkeit im Verhältnis zur Relevanzstufe für das Gruppierungskriterium und zum Bewegungsvektor, welcher zum Gruppierungspunkt für die Objekte zeigt, die das Gruppierungskriterium implementieren;
Festlegung der passiven Bewegungsgeschwindigkeit und des Bewegungsvektors, der nicht zum Gruppierungspunkt für die Objekte zeigt, die das Gruppierungskriterium nicht implementieren;
Bewegung der Objekte mit den festgelegten Geschwindigkeiten und Bewegungsvektoren,
wobei die das Gruppierungskriterium implementierenden Objekte gemäß ihrer Relevanzstufe in Gruppen verteilt werden, deren Anzahl von dem Benutzer verwaltet wird und die die gleichen Geschwindigkeiten und Bewegungsvektoren innerhalb der Gruppe aufweisen;
Festlegung einer weiteren Gruppe für jene Objekte, die den Gruppierungspunkt erreicht haben; und
Durchführung der voreingestellten Aktionen an den gruppierten Objekten an dem Gruppierungspunkt,
wobei eine Kombination des festgelegten Gruppierungspunkts und des zusätzlichen Hintergrundbilds eine grafische Attributmaske ist, die ein für das Gruppierungskriterium relevantes Attribut visualisiert, und an beliebigen Punkten in der Arbeitsebene eine beliebige Anzahl von Gruppierungspunkten auf Basis von Gruppierungskriterien und eines Gewichtsfaktors aktiviert wird,
das Verfahren weiter umfassend:

Erstellung von Ergebnispunkten zur Darstellung der Kombination eines beliebigen Sets von Gruppierungspunkten;
Erstellung der sich ergebenden Gruppierungskriterien, berechnet durch die logische Multiplikation, "Verbindung" der Kriterien für ein beliebiges der möglichen Sets von Gruppierungspunkten;
Erstellung von Gruppen auf Basis der sich ergebenden Gruppierungskriterien zur Zuordnung von Objekten;
Zuordnung der visualisierten Objekte, die das Gruppierungskriterium für die jeweilige Gruppe implementieren, deren Ergebnispunkt mithilfe des Sets zur Darstellung der Kombination mit den meisten Gruppierungspunkten erstellt wird, wobei jedes zugeordnete visualisierte Objekt die jeweiligen sich ergebenden Gruppierungskriterien implementiert; und

Realisierung einer Bewegung von jedem visualisierten Objekt in Richtung des Punktes, der mit der Gruppe verbunden ist, der das jeweilige Objekt zugeordnet ist.

2. Verfahren nach Anspruch 1, wobei die Zeigevorrichtung eine Computermaus, Stylus, Finger oder eine beliebige andere Vorrichtung sein kann, die ein Eingabesignal für die Position des Cursors auf dem Display oder einer beliebigen anderen Vorrichtung bereitstellt, welche die grafische Ausgabe einer Computervorrichtung visualisiert.

3. Verfahren nach Anspruch 1, wobei die Objekte zur Visualisierung mithilfe von Objektlisten oder strukturierten Daten eingegeben werden, die für die Computervorrichtung zugänglich sind, so wie, aber nicht ausschließlich, Vorrichtungs-Dateisystem-Listen, RSS-Kanäle, lokale oder entfernte Datenbanken, die für die Vorrichtung zugänglich sind.

4. Verfahren nach Anspruch 1, wobei die in dem Feld für Sortierung und Gruppierung oder mithilfe eines Befehls visualisierten Objekte in einer listenartigen Visualisierung der dargestellten Objekte angeordnet werden können, während die Funktionalität des grafischen Darstellungsverfahrens beibehalten wird.

5. Verfahren nach Anspruch 1, wobei der passive Bewegungsvektor der nicht für das Gruppierungskriterium relevanten Objekte durch Einsatz der Bewegungs- oder anderen Sensoren der Vorrichtung gesetzt wird, was in Abhängigkeit von der Vorrichtungsposition im Raum zum Ersatz des konventionellen voreingestellten unteren Teils des Displays durch den physischen unteren Teil des Displays führt.

6. Verfahren nach Anspruch 1, wobei die Gruppierungskriterien durch eines der Folgenden festgelegt werden:

mittels Informationsauswahl über das dargestellte Objekt, die für das Dateisystem der Vorrichtung zugänglich ist;
mittels Informationsauswahl über das dargestellte Objekt, welche von anderen Anwendungen erzeugt wurden und auf der Vorrichtung zugänglich sind;
mittels Auswahl aus der anfänglich für die Vorrichtung zugänglichen Listen und Datenbanken;
mittels Sensoren oder Peripheriegeräten, die für die Vorrichtung zugänglich sind; oder
mittels Auswahl von Attributen, die mithilfe des Zugriffs auf das visualisierte Objekt durch jene Anwendung abgerufen werden, die das Verfahren ausführt, oder durch den Erhalt von Ergebnissen von einer anderen Anwendung, die auf das visualisierte Objekt oder dazugehörige Objekte zugreift und für die Vorrichtung zugänglich ist.

7. Verfahren nach einem der vorstehenden Ansprüche, wobei während oder nach seiner Ausführung ein oder eine Vielzahl Gruppierungspunkten zugeordnete Gewichtsfaktoren verändert werden.

8. Verfahren nach einem der vorstehenden Ansprüche, wobei während oder nach der Ausführung die Konfiguration der Gruppierungspunkte und das zusätzliche Bild zur zukünftigen Verwendung gespeichert werden.

9. Verfahren nach einem der vorstehenden Ansprüche zur Visualisierung von Objekten, die als Ergebnis von Aktionen entstehen, die von anderen Anwendungen durchgeführt werden, die von der Vorrichtung ausgeführt werden oder dafür zugänglich sind.

10. Verfahren nach Anspruch 9 zur Visualisierung von Objekten, die sich aus einer Benutzeraktion in einer anderen Anwendung ergeben, deren Ergebnisse von der Vorrichtung visualisiert werden.

11. Verfahren nach Anspruch 9 zur Visualisierung von Objekten, Ergebnissen und einer Liste von mehreren Anwendungen, die für die Vorrichtung verfügbar sind.

12. Verfahren nach Anspruch 9 zum dynamischen Hinzufügen von Objekten zur Visualisierung als Ergebnis einer Aktion in anderen Anwendungen, nachdem die Gruppierungspunkte festgelegt wurden, wo keine verpflichtende Benutzeraktion erforderlich ist.

13. Verfahren nach Anspruch 12 zur Visualisierung von Ergebnissen aus anderen Anwendungen auf dem Display einer Vorrichtung in Echtzeit oder von Zeitergebnissen aus anderen Anwendungen auf dem Display einer Vorrichtung in festgelegten Intervallen.



**EP 2 810 152 B1**

**Revendications**

1. Procédé de visualisation, de groupage, de triage et de gestion d'objets de données par la réalisation d'un mouvement représentant graphiquement leur niveau d'application à certains critères définis sur un affichage de dispositif comprenant les étapes consistant à :

   créer un plan de travail comprenant un champ de visualisation d'objets et utilisé pour trier et grouper un champ pour actions de groupage, une image de fond auxiliaire et un champ de commande sur écran ;
   l'entrée d'objets pour visualisation ;
   créer des objets de données contenant un ensemble respectif des attributs disponibles pour la visualisation de chaque objet ;
   créer des visualisations d'objets de données ;
   agencer les visualisations d'objets de données dans le champ pour triage et groupage ;
   permettre le réaménagement de visualisations d'objets de données dans le champ de triage ou dans le champ d'actions de groupage au moyen d'un dispositif de pointage ;
   définir par l'utilisateur un point de groupage sur le plan de travail ;
   définir par l'utilisateur un critère de groupage au point de groupage de sorte que les objets de données ayant des attributs se rapportant au critère de groupage associé au point de groupage se déplacent vers le point de groupage ; et
   activer un procédé de groupage comprenant :

      définir une vitesse de mouvement active par rapport au niveau d'application au critère de groupage et un vecteur de mouvement pointant sur le point de groupage pour les objets qui répondent au critère de groupage ;
      définir une vitesse de mouvement passive et un vecteur de mouvement ne pointant pas sur le point de groupage pour les objets qui ne répondent pas au critère de groupage ;
      déplacer les objets avec les vitesses et les vecteurs de mouvement définis,
      dans lequel les objets qui répondent au critère de groupage sont distribués selon leur niveau d'application dans des groupes dont le nombre est géré par l'utilisateur et qui ont des vitesses et des vecteurs de mouvement égaux dans le groupe ;
      définir un autre groupe pour les objets qui ont atteint le point de groupage ; et
      réaliser des actions par défaut sur les objets groupés au point de groupage,
      dans lequel une combinaison du point de groupage défini et de l'image de fond auxiliaire est un masque d'attribut graphique qui visualise un attribut se rapportant au critère de groupage et, en des points arbitraires du plan de travail, un nombre arbitraire de points de groupage est activé sur la base du critère de groupage et d'un facteur de pondération,
      le procédé comprenant en outre :

         la création de points résultants représentant la combinaison d'un ensemble possible quelconque de points de groupage ;
         la création de critères de groupage résultants calculés par la multiplication logique « conjonction » des critères pour l'un quelconque de l'ensemble possible de points de groupage ;
         la création de groupes sur la base de critères de groupage résultants pour affecter des objets ;
         l'affectation des objets visualisés qui répondent au critère de groupage au groupe respectif, dont le point résultant est créé au moyen de l'ensemble représentant la combinaison avec la plupart des points de groupage, dans lequel chaque objet visualisé affecté répond aux critères de groupage résultants respectifs ; et
         la réalisation d'un mouvement de chaque objet visualisé vers le point associé au groupe auquel l'objet respectif est affecté.

2. Procédé selon la revendication 1, dans lequel le dispositif de pointage peut être une souris d'ordinateur, un stylet, un doigt ou n'importe quel autre dispositif fournissant un signal d'entrée pour la position du curseur sur l'affichage ou n'importe quel autre dispositif qui visualise une sortie graphique d'un dispositif informatique.

3. Procédé selon la revendication 1, dans lequel les objets de visualisation sont saisis au moyen de listes d'objets ou de données structurées accessibles au dispositif informatique comme, mais sans exclusivité, des listes de systèmes de fichiers de dispositif, des canaux RSS, des bases de données locales ou distantes accessibles au dispositif.

**4.** Procédé selon la revendication 1, dans lequel les objets visualisés dans le champ de triage et de groupage ou au moyen d'une commande peuvent être agencés dans une visualisation de type liste d'objets représentés tout en retenant la fonctionnalité du procédé de représentation graphique.

**5.** Procédé selon la revendication 1, dans lequel le vecteur de mouvement passif des objets qui ne s'appliquent pas au critère de groupage est réglé au moyen de l'emploi du mouvement d'autres capteurs du dispositif qui entraîne le remplacement de la partie de fond par défaut classique de l'affichage par la partie de fond physique de l'affichage selon la position du dispositif dans l'espace.

**6.** Procédé selon la revendication 1, dans lequel des critères de groupage sont définis par l'un des moyens suivants :

un choix d'informations sur l'objet représenté disponibles pour le système de fichiers du dispositif ;
un choix d'informations disponibles sur le dispositif autour de l'objet représenté générées par d'autres applications ;
un choix parmi les listes et bases de données initialement disponibles pour le dispositif ;
des capteurs ou de périphériques disponibles pour le dispositif ; ou
un choix d'attributs récupérés au moyen d'un accès à l'objet visualisé par l'application exécutant le procédé ou par réception de résultats d'une autre application accédant à l'objet ou aux objets visualisés qui s'y rapportent et qui sont accessibles pour le dispositif.

**7.** Procédé selon l'une quelconque des revendications précédentes, dans lequel, pendant ou après son exécution, un ou plusieurs facteurs de pondération qui sont associés aux points de groupage est ou sont changés.

**8.** Procédé selon l'une quelconque des revendications précédentes, dans lequel, pendant ou après son exécution, la configuration de points de groupage et l'image auxiliaire sont sauvegardées pour une utilisation future.

**9.** Procédé selon l'une quelconque des revendications précédentes pour visualiser des objets résultant d'actions effectuées par d'autres applications exécutées par le dispositif ou accessibles à celui-ci.

**10.** Procédé selon la revendication 9 pour visualiser des objets résultant d'une action d'utilisateur dans une autre application, dont les résultats sont visualisés par le dispositif.

**11.** Procédé selon la revendication 9 pour visualiser des objets, des résultats et une liste d'applications multiples accessibles au dispositif.

**12.** Procédé selon la revendication 9 pour une addition dynamique d'objets pour visualisation résultant d'une action dans d'autres applications une fois qu'ont été définis les points de groupage où aucune action d'utilisateur obligatoire n'est requise.

**13.** Procédé selon la revendication 12 pour visualiser en temps réel des résultats provenant d'autres applications sur l'affichage d'un dispositif ou des résultats à intervalles de temps définis venant d'autres applications sur l'affichage d'un dispositif.

grouping point
(criterion A)

Field for group actions

O

$V_{a2}$

O2
A2

$V_{a1}$

O5
B3

O1
A1

O6
A3

O3
B1

O4
B2

$V_p$

$V_p$

field for sorting and grouping

FIG 1

| | NAME | SIZE | TYPE | DATE |
|---|---|---|---|---|
| Y1 | O1 OBJECT 1 NAME | 200k | TYPE 1 | 01/01/2011 |
| Y2 | O2 OBJECT 2 NAME | 200k | TYPE 1 | 01/02/2011 |
| Y3 | O3 OBJECT 3 NAME | 220k | TYPE 2 | 01/01/2011 |
| Y4 | O4 OBJECT 4 NAME | 200k | TYPE 1 | 01/01/2011 |
| Y5 | O5 OBJECT 5 NAME | 200k | TYPE 1 | 01/01/2011 |

FIG 2 (Prior Art)

EP 2 810 152 B1

FIG 3 (Prior Art)

FIG 4 (Prior Art)

EP 2 810 152 B1

FIG 5

FIG 6

25

**FIG 7A**

*from FIG 7A*

— **10.1.**

**the user has moved the object to the field for group actions?**

YES

— **10.2**

**Data Object remains in group actions field**

NO

— **10**

**Moving the objects with the assigned speed and vector of movement**
*(toward grouping points for active movement; toward bottom of the screen for passive movement)*

— **11.**

*method step*

**Grouping the objects in the grouping points and managing the objects**

END

**FIG 7B**

EP 2 810 152 B1

EXECUTION OF
PASIVE AND
ANTIVE MOVEMENT

data object is selected for
active movement

НЕ                    ДА

9.2.                                                          9.2.

Assigning speed of movement

Assigning speed of movement
representative of the degree of relevance of
the objects attributes to the grouping
criterion

9.3.                                                          9.3.

Assigning a direction vector

Assigning a direction vector for visualized
objects selected
(toward relevant grouping point)

method
step

method
step

FIG 8

28

grouping point (criterion A)

O1 O2
A1 A2

$V_a$

$T_{AB}$ – resultant grouping point criteria AB

O7
A7;B7

$V_{ab}$

$T_{AC}$

$T_{ABC}$ (criteria ABC)

O8
A8;B8;C8

$V_{abc}$

grouping point (criterion B)

O4
B2 O3
B1

$V_b$

$T_{BC}$ (criteria BC)

grouping point (criterion B)

O9
C9

$V_c$

$V_p$

O10  O11

Field for Group Actions

O5
B3

O6
A3

FIG 9

| O1 | OBJECT 1 NAME | 200k | TYPE 1 | 01/01/2011 |
| O2 | OBJECT 2 NAME | 200k | TYPE 1 | 01/02/2011 |
| O3 | OBJECT 3 NAME | 220k | TYPE 2 | 01/01/2011 |
| O4 | OBJECT 4 NAME | 200k | TYPE 1 | 01/01/2011 |

O2

O4

O3

O1

FIG 10

grouping point
(criterion A)

O1 O2
A1 A2

O7
A7 B7

grouping point
(criterion B)

O4
B2 O3
B1

field for group actions

O5
B3

O6
A3

O12
A12

O8
A8 B8 C8

grouping point
(criterion C)

O9
C9

Additional Data Objects - T2

O14
C14

O10

O11

O13

FIG 11

grouping point
(criterion A)

O1 O2
A1 A2

V$_{ab7}$

O7
A7 B7

V$_{ab8}$

O8
A8 B8

grouping point
(increased weight factor B)

O4
B2 O3
B1

field for group actions

O5
B3

O6
A3

grouping point
(criterion A)

O9
C9

FIG 12

30

13.1

13.2

13.3

13.4

13.5

13.6

FIG 13

FIG 14

FIG 15

FIG 16

FIG 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0955591 A2
- EP 1762950 A2
- WO 0043908 A1
- US 5072412 A
- US 4739477 A
- EP 2146269 A1

**Non-patent literature cited in the description**

- *Vacation Photos,* 2010
- *New Year's Eve Party,* 2011